# EUROPEAN PATENT APPLICATION

(11) **EP 2 654 348 A1**
(43) Date of publication of application: **23.10.2013**
(21) Application number: 10860832.4
(22) Date of filing: 15.12.2010
(51) Int. Cl.: H04W 52/02, H04W 56/00

(54) **WIRELESS COMMUNICATION DEVICE**

(71) Applicant: Fujitsu Limited, Kawasaki-shi, Kanagawa 211-8588 (JP)
(72) Inventor: IMAGAWA, Hidenori, Kawasaki-shi Kanagawa 213-0012 (JP); MATSUYAMA, Koji, Kawasaki-shi Kanagawa 211-8588 (JP)
(74) Representative: Lewin, David Nicholas
(86) International application number: PCT/JP2010/072556
(87) International publication number: WO 2012/081093

(57) **Abstract**

A wireless communication device comprises a transmission unit for holding a wireless control resource exclusive to the wireless communication device, the wireless control resource being used in wireless communication to the other device; a reception unit for receiving a signal including data having at least one of first information and second information; and a reception extension control unit for extending the reception interval until a time where a first predetermined duration has elapsed, in a case where the data received by the reception unit includes the first information, the reception extension control device terminating the extension of the reception interval in a case where the reception extension control unit has extended the reception interval until the time where the first predetermined duration has elapsed and where the data received thereafter by the reception unit does not contain the first information.

## Description

### FIELD

The present invention relates to a wireless communication apparatus performing discontinuous receptions.

### BACKGROUND

An online communication application is given as a service provided to a portable terminal (mobile station) such as a cellular phone. In the online communication application, the portable terminal periodically conducts transmissions and receptions. The portable terminal is requested to restrain power consumption though the transmissions and the receptions are periodically performed. Further, if the online service involves a long period of time expended till completing the transmission and the reception since the transmission and the reception have been started, a user of the portable terminal feels a stress as the case may be. The online service is therefore required to restrain the period of time expended till completing the transmission and the reception since the transmission and the reception have been started.

In an LTE (Long Term Evolution) mobile communication system pursuant to 3GPP (3rd Generation Partnership Project) standards, DRX (Discontinuous Reception) control exists even during SCH (Shared CHannel) communications. Hereafter, the DRX control will also be referred to as SCH-DRX control. In the LTE mobile communication system, a base station (eNB; eNodeB; evolved Node B) dynamically allocates an SCH wireless resource to a mobile station (UE; User Equipment) on a time base. Further, the base station takes an initiative to manage the allocations of the wireless resources at both of uplink and downlink. Herein, an uplink direction is defined as a direction to the base station from the mobile station, while a downlink direction is defined as a direction to the mobile station from the base station. On the occasion of a downlink transfer, the base station can detect occurrence of downlink transfer data and can therefore transfer the transfer data to the mobile station immediately without any delay. In contrast with this transfer, on the occasion of an uplink transfer, the mobile station side detects the occurrence of the uplink transfer data, and the mobile station requests the base station for the uplink wireless resource. In response to this request, the base station allocates the wireless resource to the mobile station. Hereafter, the mobile station actually transfers the transfer data to the base station by use of the allocated wireless resource.

### [Documents of Prior Arts]

### [Patent document]

[Patent document 1] Japanese Patent Application Laid-Open Publication No.2009-531973
[Patent document 2] Japanese Patent Application Laid-Open Publication No.2009-165133
[Patent document 3] Japanese Patent Application Laid-Open Publication No.H11-177524
[Patent document 4] Japanese Patent Application Laid-Open Publication No.2002-171219
[Patent document 5] Japanese Patent Application Laid-Open Publication No.2008-244526

### SUMMARY

In the LTE communication system, there are a reception interval (period) in which the mobile station receives the data and a DRX (Discontinuous Reception) interval (period) in which the mobile station does not receive the data.

The mobile station transmits an SRS (Sounding Reference Symbol) to the base station in order to keep an uplink wireless resource. The base station transmits, based on the SRS given from the mobile station, a TA Command (Timing Advance Command) to the mobile station. The TA Command is a command for keeping uplink synchronization. The mobile station receiving the TA Command controls a reception interval. Specifically, the mobile station receiving the TA Command extends the reception interval. The extension of the reception interval elongates a period of time for which the mobile station is kept in a reception status, resulting in an increase in power consumption of the mobile station. Further, the mobile station receiving the TA Command starts up or restarts up a TA timer (Time Alignment Timer). When the TA timer expires, the mobile station is determined to get released from the uplink synchronization.

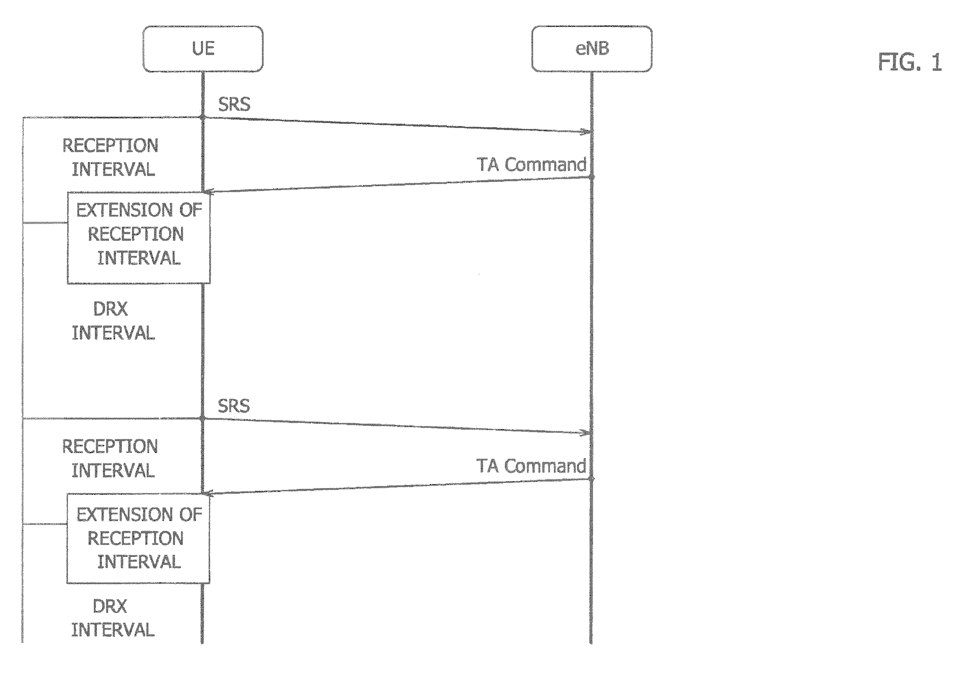

FIG. 1 is an explanatory diagram of the uplink synchronization in the LTE communication system. The base station (eNB) monitors the release from the uplink synchronization with the mobile station (UE) separately from the downlink synchronization. The base station manages the release from the uplink synchronization by use of the SRS (Sounding Reference Symbol) that is periodically transmitted by the mobile station. The base station, e.g., if the SRS is not transmitted for a predetermined period of time from the mobile station, determines that the uplink synchronization with the mobile station is released. The mobile station monitors the release from the uplink synchronization on the basis of the TA Command transmitted by the base station upon receiving the SRS. To be specific, the mobile station periodically transmits the SRS during the reception interval (time). The base station, upon receiving the SRS, transmits the TA Command to the mobile station. The mobile station starts up or restarts up the TA timer whenever receiving the TA Command, and determines that the uplink synchronization is released when the TA timer expires. When the uplink synchronization is released, the mobile station releases an allocated SR resource (control resource). Note that a TA timer value at the startup time is given from the base station. The TA timer value is notified through, e.g., notifying information given from the base station 200. The TA timer value is defined as a period of time till the TA timer expires since the TA timer has been started up. The TA Command is a command (information) for keeping the uplink synchronization. The mobile station keeps the uplink synchronization (control resource) on the basis of the TA Command. The mobile station, when receiving data containing the TA Command etc, extends the reception interval.

Furthermore, the mobile station during SCH-DRX control does not perform a process of keeping the uplink synchronization. "The mobile station during the SCH-DRX control" represents the mobile station entering a DRX interval. That is, the mobile station during the SCH-DRX control does not transmit the SRS to the base station. Hence, unlike continuous reception control, there is a possibility that the uplink synchronization is released. This is because there is a possibility that the TA timer expires during the SCH-DRX control. If the uplink synchronization is released, it might happen that a considerable period of time is taken for transmitting the uplink data on the occasion of occurrence of the uplink data.

An apparatus of the disclosure of the present application aims at saving power consumed when performing wireless communications and restraining a delay of data transmission.

### [Means for solving the Problems]

An apparatus of the disclosure adopts the following means in order to solve the problems given above.

To be specific, according to a first aspect, a wireless communication apparatus in which to alternately set a reception interval for receiving signals from another apparatus and a non-reception interval for not receiving the signals from another apparatus, includes:
a transmission unit to retain a wireless control resource used for wireless communications with another apparatus and exclusively possessed by the wireless communication apparatus;
a reception unit to receive signals containing data having at least one of first information and second information; and
a reception extension control unit to extend, when the data received by the reception unit contain the first information, the reception interval up to when first predetermined time elapses,
wherein the reception extension control unit, after extending the reception interval up to when the first predetermined time elapses and when the data received by the reception unit do not contain the first information, stops the extension of the reception interval.

### [Effects of the invention]

According to an embodiment of the disclosure, it is feasible to save the power consumed when performing the wireless communications and restraining the delay of data transmission.

### BRIEF DESCRIPTION OF THE DRAWINGS

FIG. 1 is an explanatory diagram of uplink synchronization in an LTE communication system.
FIG. 2 is a diagram illustrating an example of MAC PDU.
FIG. 3 is an explanatory diagram of a method of transmitting an SR.
FIG. 4 is an explanatory diagram of a supplying method through an RA Procedure.
FIG. 5 is a diagram illustrating an example of a configuration of a mobile communication system in the embodiment.
FIG. 6 is a diagram illustrating an example of a timing schedule of a reception interval and a DRX interval in a mobile station.
FIG. 7 is a diagram illustrating and example of an operation flow of a reception extension control unit of the mobile station.
FIG. 8 is a diagram illustrating an example where the reception interval is extended.
FIG. 9 is a diagram illustrating an example where the reception interval is not extended.
FIG. 10 is a diagram illustrating an example where the extension of the reception interval is stopped.

### DESCRIPTION OF EMBODIMENTS

An embodiment will hereinafter be described with reference to the drawings. A configuration of the embodiment is an exemplification, and the present invention is not limited to the configuration of the embodiment.

In the present embodiment, a mobile communication system using a method specified by LTE (Long Term Evolution) will be described by way of an example, however, the present invention is not limited to this system but can be also applied to communications systems exploiting other methods.

### (LTE Communication System)

Descriptions of DRX control during SCH communications, downlink data reception and an uplink resource request in an LTE communication system, will be made.

### << DRX Control during SCH Communications>>

In the LTE communication system, there are a reception interval (period) during which a mobile station (user equipment (UE)) receives data and a DRX (Discontinuous Reception) interval (period) during which the mobile station does not receive the data. During the reception interval, a reception control unit of the mobile station is in an ON-status, and the mobile station can receive the data from a base station. During the DRX interval, the reception control unit of the mobile station is in an OFF-status, and the mobile station does not receive the data from the base station. The DRX interval is defined as a non-reception interval. In the LTE communication system, if there is no data to be transmitted and received even during starting up a packet transmission/reception service, transmission/reception control in the DRX interval may not be performed. With this contrivance, the mobile station can extend continuous speech time and continuous packet transmission/reception time even during transmitting and receiving the packets. Further, for realizing the continuous reception, when the mobile station receives the downlink data in the reception interval from the base station, it is specified by 3GPP standards that the reception interval is to be extended.

### «Reception of Downlink Data»

In the reception of downlink data in the mobile station, the mobile station receives both of PDCCH (Physical Downlink Control Channel) data and PDSCH (Physical Downlink Shared Channel) data from the base station. PDCCH is defined as a physical channel for control at which to transmit and receive control information between the mobile station and the base station. PDSCH is defined as a physical channel for data at which to transmit and receive user data between the mobile station and the base station. The PDCCH data contain the control information about whether or not there is the downlink data addressed to each mobile station that is contained the PDSCH data. The determination as to whether or not there is the downlink data addressed to each mobile station that is contained the PDSCH data, is made based on whether or not there is an identifier of each mobile station that is contained in the PDCCH data. The PDSCH data contain the actual downlink data. The downlink data is transmitted in the way of being contained in, e.g., a MAC PDU (Media Access Control Protocol Data Unit). The MAC PDU contains a MAC header, a MAC SDU (Service Data Unit) and a TA (Timing Advance) command. The determination as to whether the MAC PDU contains the MAC SDU or not can be made by analyzing the header of the MAC PDU. The MAC SDU contains, e.g., e-mails and service data such as VoIP (Voice over Internet Protocol). The PDCCH data and the PDSCH data can contain information on whether the service is a real-time service or not.

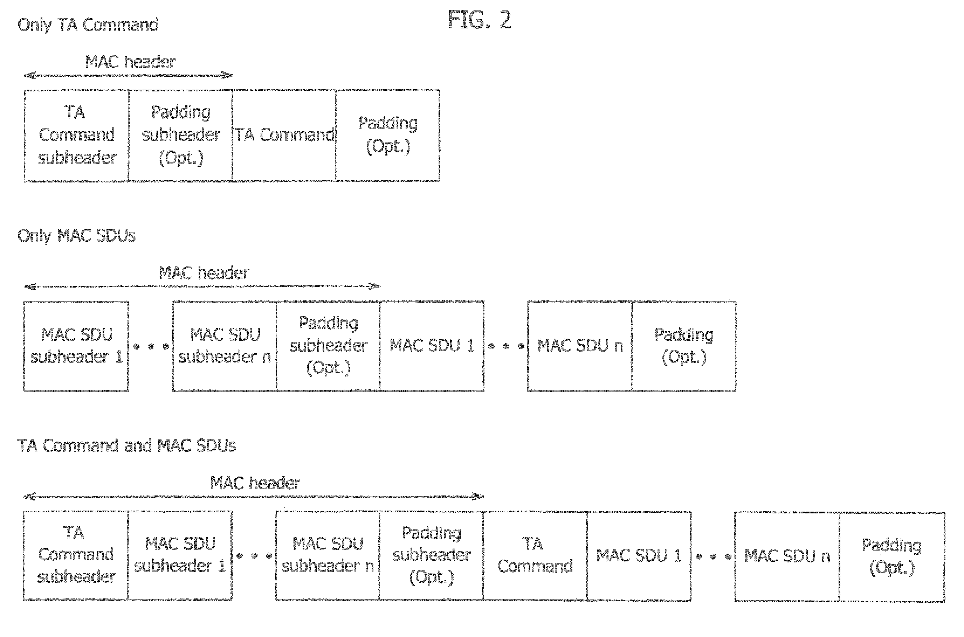

FIG. 2 is a diagram illustrating an example of the MAC PDU. The example of FIG. 2 illustrates, from above, the MAC PDU containing the TA Command, the MAC PDU containing the MAC SDU, and the MAC PDU containing the TA Command and the MAC SDU. The MAC PDU, in the case of containing the TA Command, contains a header associated with the TA Command. Similarly, the MAC PDU, in the case of containing the MAC SDU, contains a header associated with the MAC SDU. The MAC header of the MAC PDU is analyzed, whereby it can be determined from a header type thereof whether the MAC PDU contains the MAC SDU or not.

Under the normal DRX control, the mobile station, if there is the control information indicating that the PDCCH data contains the downlink data addressed to the mobile station itself, extends the reception interval. In other words, under the normal DRX control, the mobile station does not extend the reception interval if failing to receive the PDCCH data but extends the reception interval if succeeding in receiving the PDCCH data irrespective of the success or failure (CRC-OK/NG) in the reception of the PDSCH data.

### <<Uplink Wireless Resource Request>>

An uplink wireless resource request in the LTE communication system will be described. As a method of making a request for the uplink wireless resource, such two methods exist as a method of transmitting SR (Scheduling Request) by use of resource dedicated to PUCCH (Physical Uplink Control CHannel) for the uplink wireless resource request and a method of making the request through RA Procedure (Random Access Procedure).

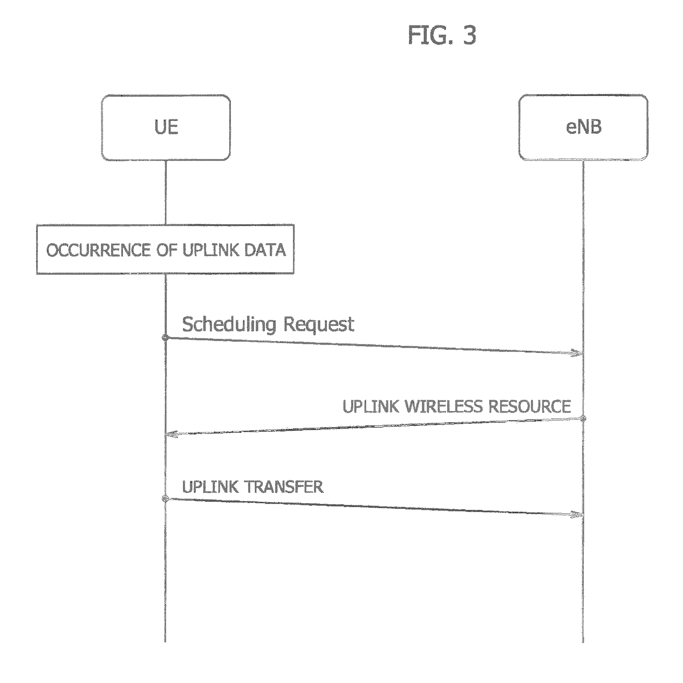

FIG. 3 is an explanatory diagram of how the SR is transmitted. The former SR transmission method is that the mobile station having the uplink data transmits the SR for requesting the base station for the uplink wireless resource. The uplink wireless resource is a resource for transmitting the uplink data. A control resource (wireless control resource), which is already allocated to the mobile station, are used as an SR resource. An uplink wireless resource is a resource exclusively possessed and exploited by the mobile station for the wireless communications with the base station. Uplink synchronization is taken between the base station and the mobile station, which implies that there is the control resource allocated to this mobile station. The control resource is allocated to every mobile station. The mobile station transmits the SR to the base station by exploiting the control resource allocated to the self-station. The base station, upon receiving the SR transmitted in a way that exploits the control resource allocated to the mobile station, can specify the mobile station that has transmitted the SR by knowing which control resource is exploited. The mobile station (eNB) can discern the mobile station (UE) immediately after receiving the SR and can allocate the uplink wireless resource to the mobile station making the request for the uplink wireless resource. The mobile station allocated with the uplink wireless resource transmits the uplink data by making use of the uplink wireless resource. The SR (Scheduling Request) is, if the mobile station has the uplink data that is transmitted to the base station, transmitted for requesting the base station to allocate the uplink wireless resource.

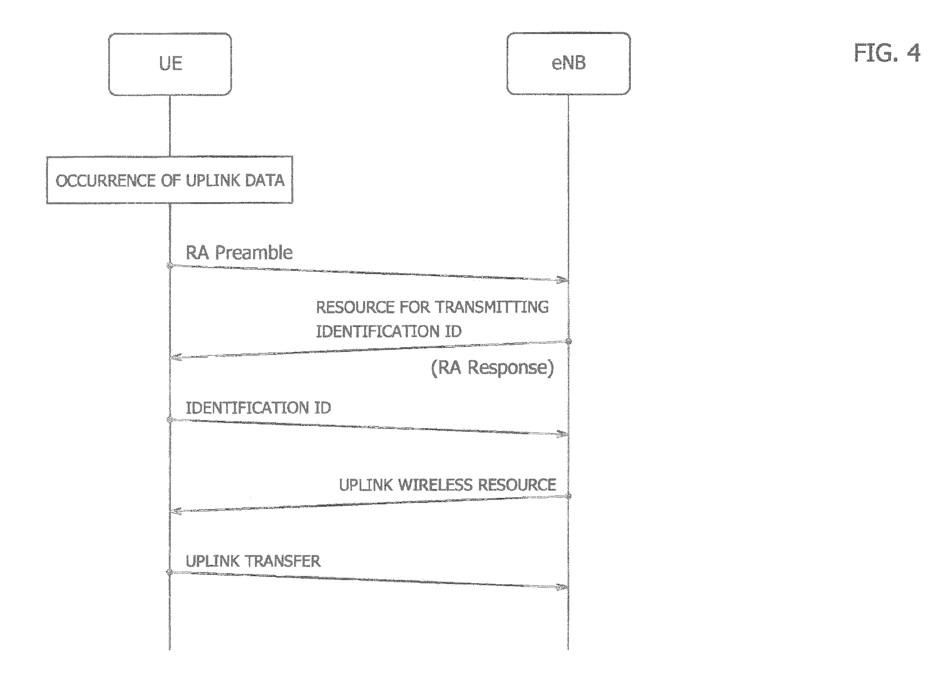

FIG. 4 is an explanatory diagram of a method of making the request through RA Procedure. The latter method of making the request through the RA Procedure is that the operation starts from transmitting RA Preamble that exploits shared resources, i.e., the resources shared between or among the plurality of mobile stations. The mobile station making the request for the uplink wireless resource transmits the RA Preamble to the base station by making use of the shared resources. There is a case where the plurality of mobile stations simultaneously puts the requests, and hence the base station executes once an identification checking process about each mobile station. The base station allocates the resource for transmitting an identification ID to the mobile station and transmits information on the identification ID transmission resource (allocation information of the identification ID transmission resource) to the mobile station. The mobile station transmits the identification ID to the base station in a way that exploits the allocated identification ID transmission resource. The allocation of the uplink wireless resource is delayed longer by one roundtrip of this checking process than the SR transmission method. The base station, thereafter, allocates the uplink wireless resource to the mobile station and transmits information on the uplink wireless resource (allocation information of the uplink wireless resource) to the mobile station. The mobile station transmits the uplink data by making use of this uplink wireless resource. Further, if the requests for the uplink wireless resources get conflicted between or among the mobile stations, the mobile station excluded from the selection redoes the operation from the retransmission of the RA Preamble after the identification checking process, and therefore a delay of several tens to several hundreds of milliseconds (ms) occurs. The method of making the request via the RA Procedure is more time-consuming for transmitting the uplink data than the SR transmission method. Hence, it is desirable that the request for the uplink wireless resource is made by the SR transmission method.

### (Example of Configuration)

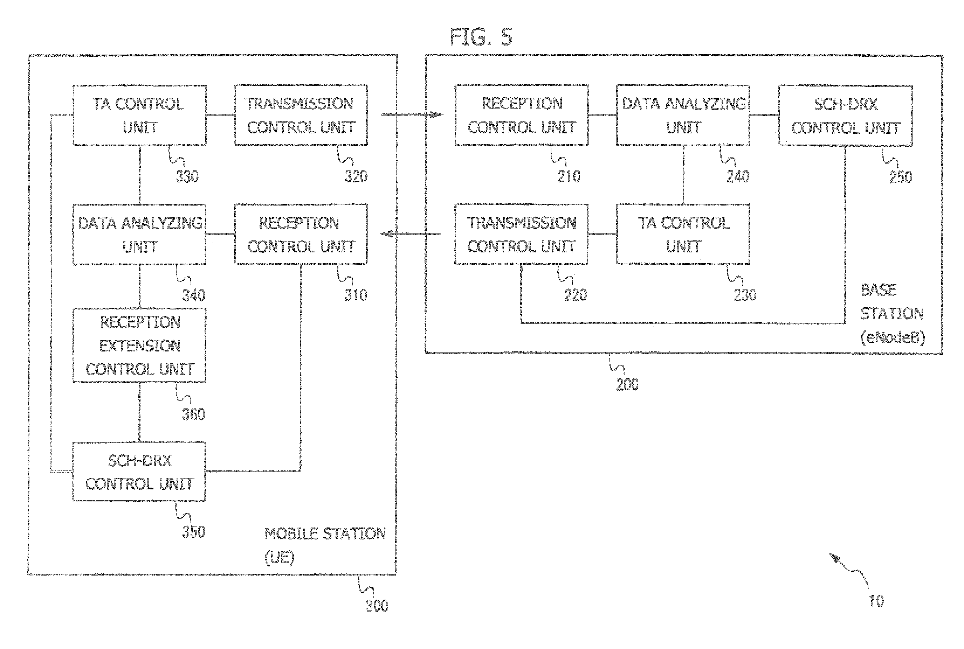

FIG. 5 is a diagram illustrating an example of a configuration of the mobile communication system in the present embodiment. A mobile communication system 10 in the present embodiment includes a base station 200 (eNodeB) and a mobile station 300 (UE). The base station 200 and the mobile station 300 perform the wireless communications with each other. The mobile communication system 10 in FIG. 5 includes one base station 200 and one mobile station 300, however, a system including a plurality of base stations and a plurality of mobile stations is also available.

The base station 200 includes a reception control unit 210, a transmission control unit 220, a TA control unit 230, a data analyzing unit 240, and an SCH-DRX control unit 250. The base station 200 conducts the wireless communications with the mobile station 300. The base station 200 is connected to a network via a higher-order base station management apparatus etc.

The reception control unit 210 receives radio signals from the mobile station 300. The reception control unit 210 demodulates the received radio signals into reception data. The reception control unit 210 transfers the reception data to the data analyzing unit 240.

The transmission control unit 22 transmits the radio signals to the mobile station 300. The transmission control unit 220 modulates the transmission data into the radio signals.

The TA control unit 230, when receiving an SRS (Sounding Reference Symbol) from the mobile station 300, generates the TA Command as a response to this SRS.

The data analyzing unit 240 performs a data analysis of the radio signals transmitted from the mobile station 300 and received by the reception control unit 210. The data analyzing unit 240 extracts the SRS out of the radio signals transmitted from the mobile station 300 and transfers the SRS to the TA control unit 230.

The SCH-DRX (Shared Channel-Discontinuous Reception) control unit 250 controls the reception interval and the DRX interval.

Functions of the respective processing units of the base station 200 can be realized by use of a processor, a storage device, etc of a computer. The processor is exemplified such as a CPU (Central Processing Unit) and a DSP (Data Signal Processor). The storage device is exemplified such as a main storage device and a secondary storage device. The main storage device is exemplified by, e.g., a RAM (Random Access Memory) and a ROM (Read Only Memory). The secondary storage device is exemplified by, e.g., an EPROM (Erasable Programmable ROM) and a hard disk drive (HDD). Further, the secondary storage device can include a removable medium, i.e., a portable recording medium. The removable medium is a disc recording medium such as a USB (Universal Serial Bus) memory or a CD (Compact Disc) and a DVD (Digital Versatile Disc).
The functions of the individual processing units can be realized in such a way that the processor loads programs stored in the secondary storage device into the main storage device and then executes the programs. The storage device can be stored with items of information of the uplink wireless resources allocated to the mobile stations, the control resources, etc.

The mobile station 300 includes a reception control unit 310, a transmission control unit 320, a TA control unit 330, a data analyzing unit 340, an SCH-DRX control unit 350 and a reception extension control unit 360. The mobile station 300 can be actualized by using a dedicated or general-purpose computer such as a smartphone, a mobile phone and a car navigation system, or by using an electronic device mounted with the computer.

The reception control unit 310 receives the radio signals from the base station 200. The reception control unit 310 demodulates the received radio signals into the reception data. The reception control unit 310 transfers the reception data to the data analyzing unit 340.

The transmission control unit 320 transmits the radio signals to the base station 200. The transmission control unit 320 modulates the transmission data into the radio signals. The transmission control unit 320 implements management to retain or release the uplink wireless resources.

The TA control unit 330, upon receiving the TA Command, starts up a TA timer. A TA timer value is given beforehand by the base station 200. The TA timer value is defined as a period of time till the TA timer expires since the TA timer has been started up. The TA control unit 330, in the reception interval (including an extended case), generates the SRS at an interval of predetermined time and transmits the SRS to the base station via the transmission control unit 320. A value (time) sufficient for receiving the TA Command since the mobile station 300 has transmitted the SRS, is set as the TA timer value.

The data analyzing unit 340 carries out the data analysis of the radio signals transmitted from the base station 200 and received by the reception control unit 310. The data analyzing unit 340 extracts the TA Command and the MAC SDU out of the radio signals transmitted from the mobile station 300. The data analyzing unit 340 transfers the TA Command to the TA control unit 330. The data analyzing unit 340 processes the PDSCH data containing the downlink data addressed to the mobile station 300 itself. A determination as to whether or not the PDSCH data contain the downlink data addressed to the mobile station 300 itself is made based on whether or not there is an identifier of the mobile station 300 itself, which is contained in the PDCCH data.

The SCH-DRX control unit 350 controls the DRX interval. The SCH-DRX control unit 350, when the DRX interval starts, instructs the reception control unit 310 to stop receiving the radio signals transmitted from the base station 200. The stop of the reception of the radio signals enables the mobile station to reduce its own power consumption. The SCH-DRX control unit 350, when the DRX interval terminates, instructs the reception control unit 310 to resume receiving the radio signals transmitted from the base station 200.

The reception extension control unit 360 performs the control about whether the reception interval is extended or not. The reception extension control unit 360 controls an extension of the reception interval corresponding to the reception data, a service provided underway, etc. The reception control unit 310 goes on controlling till the reception interval terminates since the mobile station 300 has entered the reception interval. After the termination of the reception interval, the mobile station 300 enters the DRX interval.

Functions of the respective processing units of the mobile station 300 can be realized by use of the processor, the storage device, etc of the computer. The processor is exemplified such as the CPU (Central Processing Unit) and the DSP (Data Signal Processor). The storage device is exemplified such as the main storage device and the secondary storage device. The main storage device is exemplified by, e.g., the RAM (Random Access Memory) and the ROM (Read Only Memory). The secondary storage device is exemplified by, e.g., the EPROM (Erasable Programmable ROM) and the hard disk drive (HDD). Further, the secondary storage device can include the removable medium, i.e., the portable recording medium. The removable medium is the disc recording medium such as the USB (Universal Serial Bus) memory or the CD (Compact Disc) and the DVD (Digital Versatile Disc). The functions of the individual processing units can be realized in such a way that the processor loads the programs stored in the secondary storage device into the main storage device and then executes the programs. The storage device can be stored with items of information of, e.g., the TA timer value, the extension time of the reception interval, the user data, the services provided on the mobile station, etc.

### (Operational Example)

The base station 200, when receiving from the mobile station 300 the SR (Scheduling Request) by exploiting the control resource allocated to the mobile station 300, determines the uplink wireless resource allocated to the mobile station 300 in a way that corresponds to a free status of the uplink wireless resource at that point of time. Namely, the base station 200 allocates the free uplink wireless resource at that point of time to the mobile station 300. The base station 200 transmits to the mobile station 300 the information of the uplink wireless resource allocated to the mobile station 300. The mobile station 300 transmits the uplink data by use of the uplink wireless resource allocated from the base station 200. The information of the control resource and the information of the uplink wireless resource are managed by, e.g., the transmission control unit 320 of the mobile station 300.

Moreover, the mobile station 300, for keeping the allocated control resource, transmits in the reception interval the data containing the SRS for every predetermined time to the base station 200. The reception control unit 210 of the base station 200, upon receiving the data containing the SRS from the mobile station 300, transfers the data to the data analyzing unit 240. The data analyzing unit 240, when extracting the SRS from the received data, transmits the SRS to the TA control unit 230. The TA control unit 230, when receiving the SRS, generates the TA Command for the mobile station 300 and transmits the TA Command to the transmission control unit 220. The transmission control unit 220 transmits the data containing the TA Command to the mobile station 300.

The reception control unit 310 of the mobile station 300, when receiving the data containing the TA Command from the base station 200, transfers the data to the data analyzing unit 340. The data analyzing unit 340, when extracting the TA Command from the received data, transmits the TA Command to the TA control unit 230. The TA control unit 230, upon receiving the TA Command, starts up the TA timer. If the TA timer starts underway, the TA control unit 230 stops the TA timer starting underway when receiving the TA Command, and newly starts up (restarts) the TA timer. The TA timer expires when the time of the TA timer value elapses since the TA timer has started. When the TA timer expires, the uplink synchronization with the base station 200 is released. That is, the control resource allocated to the mobile station 300 is released.

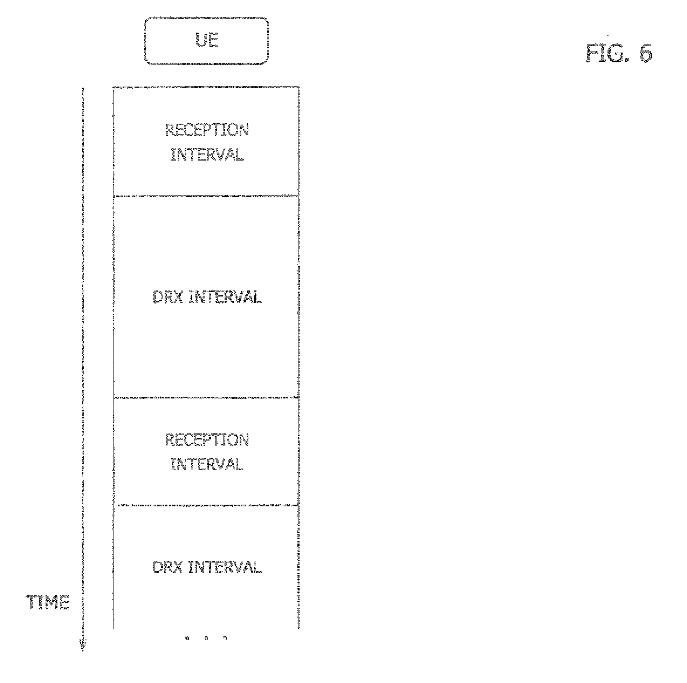

FIG. 6 is a diagram illustrating an example of a time schedule of the reception interval and the DRX interval that are set in the mobile station. The time schedule in FIG. 6 is the time schedule in the reception status of the mobile station. In the example of FIG. 6, the reception interval and the DRX interval alternately appear on a time base. A length of the reception interval and a length of the DRX interval are previously set. The reception extension control unit 360 of the mobile station 300 extends the reception interval as the case may be. The reception extension control unit 360 and the SCH-DRX control unit 350, even if the reception interval is extended, do not change the time when the DRX interval next to this reception interval terminates. The DRX interval is an interval in which the power consumption of the mobile station 300 is smaller than in the reception interval.

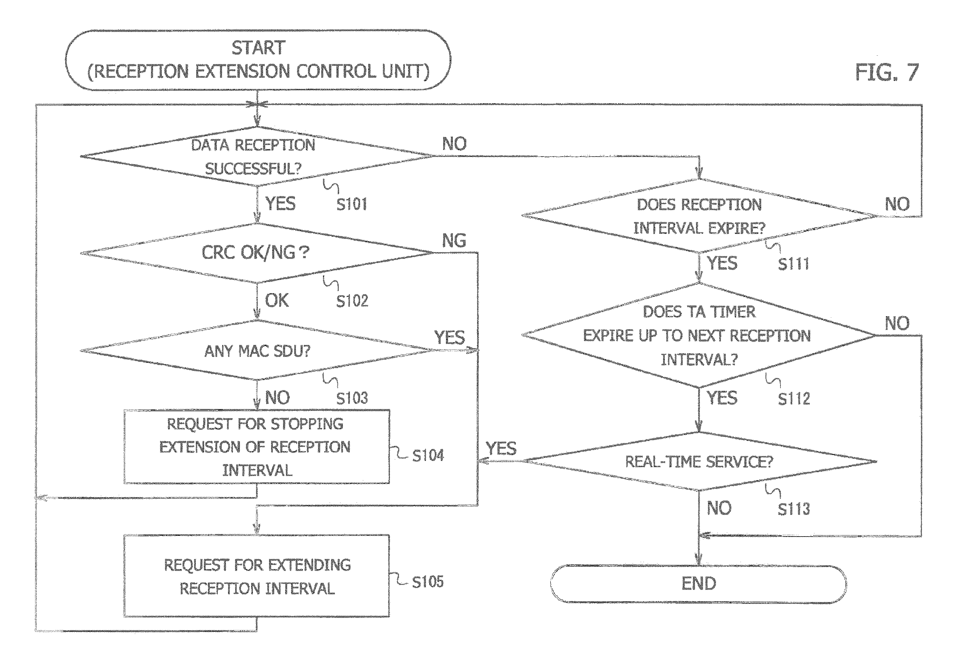

FIG. 7 is a diagram illustrating an example of an operation flow of the reception extension control unit of the mobile station. The reception extension control unit 360 of the mobile station 300 controls the extension of the reception interval. The reception extension control unit 360 operates in the reception interval of the mobile station 300. It is herein assumed that the base station 200 has already allocated the uplink control resource to the mobile station 300. The reception extension control unit 360 operates upon entrance of the mobile station 300 into the reception interval. Further, the transmission control unit 320 of the mobile station 300, when the mobile station 300 enters the reception interval, transmits the SRS for keeping the uplink wireless resource to the base station 200.

A start of the operation flow of the reception extension control unit in FIG. 7 is triggered by the mobile station 300 entering the reception interval.

In step S101, the reception extension control unit 360 determines whether the data reception gets successful or not. The reception extension control unit 360 determines whether or not the reception of the data (downlink data) transmitted via the PDSCH (Physical Downlink Sheared Channel) gets successful.

If the mobile station 300 does not receive the data transmitted via the PDSCH from the base station 200 or if the PDSCH data cannot be correctly received, the reception extension control unit 360 determines that the data reception gets unsuccessful (S101; NO). At this time, the processing advances to step S111. Whereas if receiving the data transmitted via the PDSCH from the base station 200, the reception extension control unit 360 determines that the data reception gets successful (S101; YES). At this time, the processing advances to step S102.

In step S102, the reception extension control unit 360 determines as to [CRC (Cyclic Redundancy Check) OK/NG]. To be specific, the reception extension control unit 360 determines whether the data (MAC PDU) transmitted via the PDSCH from the base station 200 is normally received or not. Even when receiving the MAC PDU and if not normally received due to an error etc in the data, a subsequent process is disabled from being executed, and hence the reception extension control unit 360 checks whether the MAC PDU is normally received or not. If the MAC PDU is normally received (S102; OK), the processing advances to step S104. The data transmitted via the PDSCH is transferred to the reception extension control unit 360 through the data analyzing unit 340. Whereas if the MAC PDU is not normally received (S102; NG), the processing advances to step S105. The determination in step S102 may also be done by the data analyzing unit 340.

In step S103, the reception extension control unit 360 determines whether the MAC SDU is contained in the normally received MAC PDU or not. It can be determined from the header type given by analyzing the MAC header of the MAC PDU whether the MAC PDU contains the MAC SDU or not (see FIG. 2). For example, the determination of whether the MAC PDU contains the MAC SDU or not is made based on whether or not the MAC header of the MAC PDU contains a MAC SDU subheader. If the MAC PDU contains the MAC SDU (S103; YES), the processing advances to step S105. The MAC SDU contains the e-mails and the service data of VoIP etc. The service data of the email and VoIP etc are consecutively transmitted in many cases. Hence, if the MAC PDU contains the MAC SDU, there is a high possibility that the MAC SDU is transmitted from the base station 200 continuously, so that the reception interval is extended. Whereas if the MAC PDU does not contain the MAC SDU (S103; NO), the processing advances to step S104. If the MAC PDU does not contain the MAC SDU, there is a low possibility that the MAC SDU is transmitted from the base station 200 continuously, so that the reception interval may not be extended. Further, if the MAC PDU does not contain the MAC SDU, the TA Command is contained in the MAC PDU in some cases. The TA Command is the command for keeping the uplink synchronization, and therefore the reception interval may not be extended due to the reception of the TA Command. The determination in step S103 may be done by the data analyzing unit 340.

In step S104, the reception extension control unit 360 makes a request for stopping the extension of the reception interval. This is because the reception interval may not be extended in the case of the MAC SDU not being contained in the MAC PDU. The reception extension control unit 360, if the reception interval has already been extended and if entering the time of the extension in excess of the previous reception interval, makes a request for canceling the extension of the reception interval. Moreover, the reception extension control unit 360, if the reception interval has already been extended but if still within the previous reception interval, makes a request for setting the reception interval back to the previous reception interval by canceling the extension of the reception interval. The reception extension control unit 360, if the reception interval is not extended, does nothing because of there being no extension stopping target. After the process in step S104, the processing loops back to S101.

In step S105, the reception extension control unit 360 makes the request for extending the reception interval. The reception extension control unit 360 makes the request for extending the reception interval up to when a predetermined period of time elapses from the point of the present time. After the process in step S105, the processing loops back to S101. The reception interval is extended in such a case that there is a high possibility of the data being transmitted from the base station 200. For example, in the case of [CRC NG] in step S102, there is the high possibility of the data being retransmitted from the base station 200. Further, if the MAC PDU contains the MAC SDU (S103; YES), there is the high possibility that the MAC PDU containing the MAC SDU is transmitted from the base station 200 continuously. Furthermore, if the real-time service is provided on the mobile station 300 (S113; YES), there is the high possibility that the data are transmitted continuously from the base station 200. The time to be extended may be set to a predetermined period of time since after the previous reception interval terminates in place of being set to when the predetermined period of time elapses from the point of present time.

The request in step S104 or S105 is reflected in the process in step S111. That is, the reception extension control unit 360, based on the request in step S104 or S105, stops extending the reception interval or extends the reception interval.

In step S111, the reception extension control unit 360 checks whether the reception interval expires or not. The reception extension control unit 360 compares the time when the reception interval expires with the present time, thereby determining whether the reception interval expires or not. If requested to extend the reception interval in step S105, the reception extension control unit 360 sets the reception interval requested to be extended as a new reception interval and determines whether this reception interval expires or not.

Further, if requested to stop extending the reception interval in step S104, the reception extension control unit 360 determines that the reception interval expires. If the previous reception interval (the reception interval before being extended) does not yet expire, the reception extension control unit 360 does not determine that the reception interval expires till the previous reception interval expires.

In the case of not determining that the reception interval expires (S111; NO), the processing loops back to S101. Moreover, in the case of determining that the reception interval expires (S111; YES), the processing advances to step S112.

In step S112, the reception extension control unit 360 determines whether or not the TA timer expires till the next reception interval. The TA timer is started up by the TA control unit 230 when receiving the TA Command from the base station 200. The TA timer expires when the TA timer value (time) elapses since when started up. The reception extension control unit 360 compares a period of time (time A) up to the next reception interval from the point of the present time with a remaining period of time (time B) of the TA timer, thus determining whether or not the TA timer expires till the next reception interval. If the time A is shorter than the time B, the reception extension control unit 360 determines that the TA timer expires till the next reception interval. Whereas if the time A is longer than the time B, the reception extension control unit 360 determines that the TA timer does not expire till the next reception interval. If the TA timer expires till the next reception interval (S112; YES), the processing advances to step S113.

While on the other hand, if the TA timer does not expire till the next reception interval (S112; NO), the processing by the reception extension control unit 360 finishes, and the mobile station 300 enters the DRX interval. At this time, the TA timer does not expire till the next reception interval, and therefore the uplink synchronization is not released in the DRX interval. Hence, even when the uplink data occur in the DRX interval, the base station 200 can be requested for the uplink wireless resource by the SR transmission method. Namely, even when the uplink transmission data occur in the DRX interval, the uplink transmission data can be transmitted to the base station 200 without any delay.

In step S113, the reception extension control unit 360 determines whether the service provided on the mobile station 300 is the real-time service or not. The service provided on the mobile station 300 is managed by the mobile station 300 and the base station 200. The real-time service includes, e.g., VoIP (Voice over Internet Protocol) service etc. The non-real-time service includes, e.g., an e-mail service. The real-time service is a service of which a quality is easy to decline if delayed. The mobile station 300 and the base station 200 recognize the service provided on the mobile station 300. It is determined from a type of RB (Resource Block) being open underway and notified from the base station 200 whether the service is the real-time service or not. Further, the determination as to whether the service is the real-time service or not may also be done from QoS (Quality of Service) allocated on a service-by-service basis. If the service provided on the mobile station 300 is the real-time service (S113; YES), the processing advances to step S105. If being the real-time service, the reception extension control unit 360 makes the request for extending the reception interval in order to transmit and receive the data continuously (S105). Whereas if the service provided on the mobile station 300 is not the real-time service (S113; NO), the processing by the reception extension control unit 360 finishes, and the mobile station 300 enters the DRX interval. When the mobile station 300 enters the DRX interval, the SCH-DRX control unit 350 sets the reception control unit 310 in an OFF status. Further, when the DRX interval expires, the SCH-DRX control unit 350 sets the reception control unit 310 in an ON status. The mobile station 300 enters the reception interval after the DRX interval has expired.

Herein, the process in step S113 is eliminated, and, if the TA timer expires till the next reception interval (S112; YES), the processing may advance to step S105. At this time, it does not happen that the TA timer expires in the DRX interval. Namely, the uplink synchronization (control resource) is kept in the DRX interval.

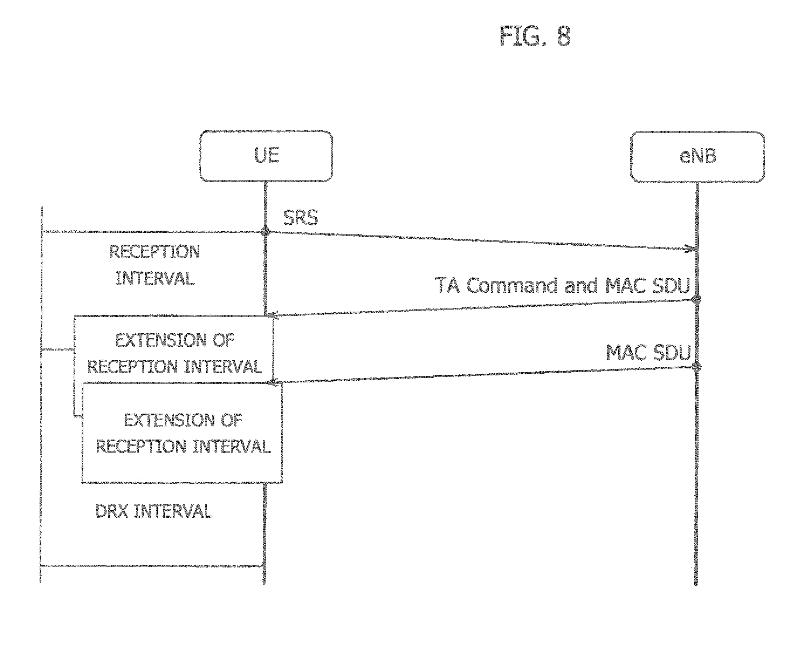

FIG. 8 is a diagram illustrating an example in which the reception interval is extended. FIG. 8 depicts an example of a sequence between the mobile station 300 (UE) and the base station 200 (eNB). The mobile station 300 entering the reception interval transmits the SRS to the base station 200. The base station 200 transmits the TA Command as a response to the SRS to the mobile station 300. At this time, the base station 200, when having the downlink data to the mobile station 300, transmits the data as the MAC PDU to the mobile station 300 in the way of being contained in the MAC SDU together with the TA Command. The mobile station 300, when confirming that the received MAC PDU contains the MAC SDU, makes the request for extending the reception interval, whereby the reception interval is extended by the predetermined time. Moreover, the base station 200, when further having the downlink data, transmits the data as the MAC PDU to the mobile station 300 in the way of being contained in the MAC SDU. The mobile station 300, when confirming that the received MAC PDU contains the MAC SDU, makes the request for extending the reception interval, thereby extending the reception interval by the predetermined time. According to the mobile station 300, if the received MAC PDU contains the MAC SDU, the reception interval is extended by the predetermined time.

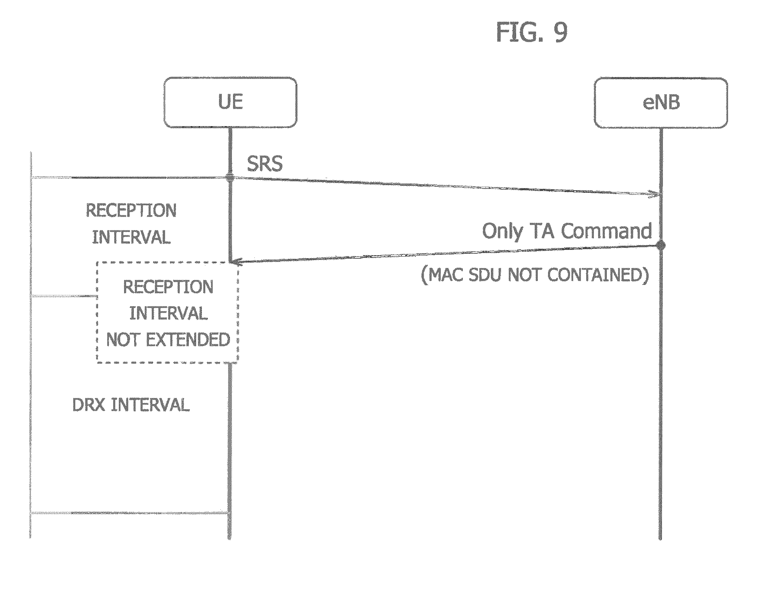

FIG. 9 is a diagram illustrating an example where the reception interval is not extended. FIG. 9 depicts an example of a sequence between the mobile station 300 (UE) and the base station 200 (eNB). The mobile station 300 entering the reception interval transmits the SRS to the base station 200. The base station 200 transmits the TA Command as a response to the SRS to the mobile station 300. The base station 200 transmits the MAC PDU containing the TA Command to the mobile station 300. At this time, when the base station 200 has none of the downlink data to the mobile station 300, the MAC SDU is not contained in the MAC PDU. As in FIG. 9, if the mobile station 300 receives the MAC PDU not containing the MAC SDU before the previous reception interval expires, the reception interval continues till the previous reception interval expires. That is, the mobile station 300 does not extend the reception interval if the received MAC PDU does not contain the MAC SDU.

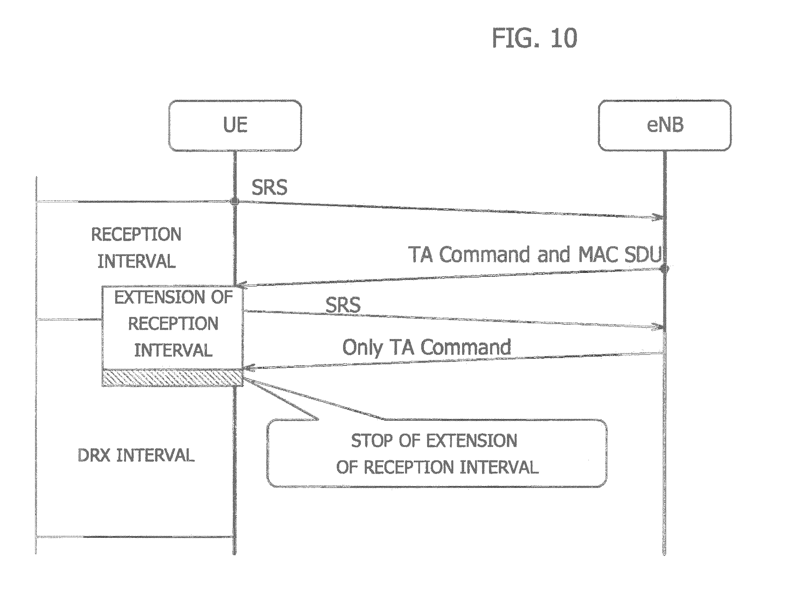

FIG. 10 is a diagram illustrating an example in which the extension of the reception interval is stopped. FIG. 10 depicts an example of a sequence between the mobile station 300 (UE) and the base station 200 (eNB). The mobile station 300 entering the reception interval transmits the SRS to the base station 200. The base station 200 transmits the TA Command as a response to the SRS to the mobile station 300. At this time, the base station 200, when having the downlink data to the mobile station 300, transmits the data as the MAC PDU to the mobile station 300 in the way of being contained in the MAC SDU together with the TA Command. The mobile station 300, when confirming that the received MAC PDU contains the MAC SDU, makes the request for extending the reception interval, whereby the reception interval is extended by the predetermined time. Moreover, the mobile station 300 further transmits the SRS to the base station 200. The base station 200 transmits the TA Command as the response to the SRS to the mobile station 300. The base station 200 transmits the MAC PDU containing the TA Command to the mobile station 300. At this time, when the base station 200 has none of the downlink data to the mobile station 300, the MAC SDU is not contained in the MAC PDU. As in FIG. 10, the mobile station 300, upon confirming that the MAC SDU is not contained in the received MAC PDU when the reception interval is extended with the expiration of the previous reception interval, makes the request for stopping the extension of the reception interval, whereby the extension of the reception interval is stopped. The mobile station 300 enters the DRX interval. The mobile station 300, however, if the service provided underway is the real-time service, makes the request for extending the reception interval, thereby extending the reception interval.

### (Operation, Effects of the Embodiment)

The reception extension control unit 360 of the mobile station 300, if the received MAC PDU does not contain the MAC SDU, stops extending the reception interval. Further, the reception extension control unit 360, whereas if the received MAC PDU contains the MAC SDU, extends the reception interval. The reception extension control unit 360, if unable to receive the MAC PDU normally, extends the reception interval. Further, the reception extension control unit 360, if the service provided underway on the mobile station 300 is the real-time service, extends the reception interval. The reception extension control unit 360, if the TA timer expires in the DRX interval and if the service provided underway on the mobile station 300 is the real-time service, extends the reception interval.

According to the mobile station 300, the uplink synchronization becomes hard to be released even when entering the DRX interval, and, if the MAC PDU does not contain the MAC SDU, the power of the mobile station 300 is saved by making the request for stopping the extension of the reception interval. Moreover, if the uplink data occur in the mobile station 300, the mobile station 300 can promptly transmit the uplink data to the base station 200 by use of the control resource kept therein.

Moreover, it is the case where the service provided underway is not the real-time service that the TA timer expires in the DRX interval. Hence, in the mobile station 300, even when the uplink synchronization is released due to the expiration of the TA timer in the DRX interval, the quality of service (QoS) is hard to decline. This is because if the service provided underway on the mobile station 300 is not the real-time service, there is the low possibility that the uplink data occur.

### [Description of the Reference Numerals and Symbols]

10 mobile communication system
200 base station
210 reception control unit
220 transmission control unit
230 TA control unit
240 data analyzing unit
250 SCH-DRX control unit
300 mobile station
310 reception control unit
320 transmission control unit
330 TA control unit
340 data analyzing unit
350 SCH-DRX control unit
360 reception extension control unit

## Claims

1. A wireless communication apparatus in which to alternately set a reception interval for receiving signals from another apparatus and a non-reception interval for not receiving the signals from another apparatus, comprising:
a transmission unit to retain a wireless control resource used for wireless communications with another apparatus and exclusively possessed by the wireless communication apparatus;
a reception unit to receive signals containing data having at least one of first information and second information; and
a reception extension control unit to extend, when the data received by the reception unit contain the first information, the reception interval up to when first predetermined time elapses,
wherein the reception extension control unit, after extending the reception interval up to when the first predetermined time elapses and when the data received by the reception unit do not contain the first information, stops the extension of the reception interval.

2. The wireless communication apparatus according to claim 1, wherein when the data received by the reception unit are not normal, the reception extension control unit extends the reception interval up to when the first predetermined time elapses.

3. The wireless communication apparatus according to claim 1 or 2, wherein the reception extension control unit, if a service provided underway is a predetermined service, extends the reception interval up to when the first predetermined time elapses.

4. The wireless communication apparatus according to any one of claims 1 through 3, further comprising a timer unit to start up a timer that expires at second predetermined time if the data received by the reception unit contain the second information,
wherein the transmission unit releases the wireless control resource when the timer expires.

5. The wireless communication apparatus according to claim 1 or 2, further comprising a timer unit to start up a timer that expires at second predetermined time if the data received by the reception unit contain the second information,
wherein the transmission unit releases the wireless control resource when the timer expires, and
the wireless communication apparatus, if the timer expires up to a next reception interval and if the service provided underway is the predetermined service, extends the reception interval up to when the first predetermined time elapses.

6. The wireless communication apparatus according to claim 4 or 5, wherein if the data received by the reception unit contain the second information and if the timer is started up, the timer unit stops the timer being started up but restarts the timer which expires at the second predetermined time.
